(19) **Europäisches Patentamt**

**European Patent Office**

**Office européen des brevets**

(11) **EP 0 652 690 B1**

(12) **FASCICULE DE BREVET EUROPEEN**

(45) Date de publication et mention
de la délivrance du brevet:
**10.05.2000 Bulletin 2000/19**

(51) Int. Cl.[7]: **H05B 39/04**, G01J 1/42,
H05B 37/02

(21) Numéro de dépôt: **94203186.5**

(22) Date de dépôt: **02.11.1994**

(54) **Dispositif de commande automatique d'éclairage**

Einrichtung zur automatischen Steuerung einer Beleuchtung

Automatic control device for lighting

(84) Etats contractants désignés:
**DE FR GB**

(30) Priorité: **09.11.1993 FR 9313377**

(43) Date de publication de la demande:
**10.05.1995 Bulletin 1995/19**

(73) Titulaire:
**Koninklijke Philips Electronics N.V.
5621 BA Eindhoven (NL)**

(72) Inventeurs:
 • **Polaert, Rémy,
 c/o Société Civile S.P.I.D.
 F-75008 Paris (FR)**
 • **Laurent, Jean-Philippe,
 c/o Société Civile S.P.I.D
 F-75008 Paris (FR)**

 • **Fouassier, Michèle,
 c/o Société Civile S.P.I.D
 F-75008 Paris (FR)**

(74) Mandataire:
**Landousy, Christian et al
Société Civile S.P.I.D.
156, Boulevard Haussmann
75008 Paris (FR)**

(56) Documents cités:
 **EP-A- 0 410 484      EP-A- 0 482 680
 DE-A- 4 112 110      GB-A- 2 060 872
 US-A- 4 491 727**

 • **ENERGY CONVERSION AND MANAGEMENT,
 vol.34, no.1, Janvier 1993, OXFORD GB pages 17
 - 28 DOUNIS ET AL. 'Building visual comfort
 control with fuzzy reasoning'**

EP 0 652 690 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un dispositif de commande automatique d'éclairage comprenant des moyens de mesure d'éclairement d'un local, et des moyens de réglage de sources d'éclairage réparties dans le local en fonction des mesures d'éclairement.

L'invention concerne également un système d'éclairage comprenant un tel dispositif.

Par local il faut entendre un lieu dans lequel sont disposées des sources d'éclairage fournissant un éclairement artificiel auquel peut s'ajouter un éclairement naturel par exemple arrivant par des fenêtres du local. L'éclairement interne comprend l'éclairement artificiel et l'éclairement naturel lorsque celui-ci existe. Dans le local sont disposés par exemple des postes de travail ou des postes pour d'autres usages, pour lesquels il est souhaitable de maintenir un niveau d'éclairement requis. Ce niveau d'éclairement peut dépendre de la manière dont le poste de travail est occupé, de la valeur de l'éclairement naturel arrivant dans le local, ou d'autres causes.

Une invention du genre décrit dans le premier paragraphe est connue du document EP 0 447 136 qui décrit un procédé et un dispositif de commande automatique d'éclairage. Le dispositif est notamment muni de moyens pour économiser l'énergie électrique fournie à des sources d'éclairage. La solution principale consiste à détecter la présence d'une personne à un poste de travail et à n'éclairer le poste de travail que lorsque celui-ci est occupé. Une solution améliorée consiste à mesurer l'éclairement du poste de travail et à adapter l'éclairage artificiel éclairant ledit poste à partir des mesures d'éclairement pour maintenir un éclairage adéquat quel que soit le moment de la journée. Lorsqu'un local dispose de plusieurs postes de travail, chaque poste de travail est alors traité individuellement. Il s'ensuit une profusion de dispositifs de commande, ce qui alourdit considérablement le coût d'une installation à plusieurs postes de travail.

Le but de l'invention est donc de proposer un dispositif de commande automatique d'éclairage moins onéreux, capable de commander plusieurs postes de travail, le dispositif devant pouvoir s'adapter aisément à des usages multiples qui sont faits du même local.

Ce but est atteint avec un dispositif de commande automatique d'éclairage dans lequel les moyens de mesure d'éclairement comprennent une unité de mesure qui délivre une pluralité de mesures d'éclairement interne opérées sélectivement dans différentes orientations, les moyens de réglage traitant, en les combinant, la pluralité de mesures pour délivrer une commande de réglage individuelle à respectivement chaque source d'éclairage.

Ainsi avantageusement, il n'est plus nécessaire de disposer d'un capteur d'éclairement pour chaque source de lumière. En effet, il suffit d'effectuer, regroupées en un même endroit du local, une pluralité de mesures d'éclairement interne dans plusieurs directions différentes. Ces mesures sont ensuite traitées en combinaison pour commander le fonctionnement de chaque source d'éclairage. Il n'y a pas de relation biunivoque entre le nombre de sources d'éclairage du local et le nombre d'orientations dans lesquelles s'effectuent les mesures. Il suffit de choisir correctement ces directions pour avoir des mesures significatives de l'éclairement interne du local. Préférentiellement, on évite que dans ces directions se présente une fenêtre pour ne pas mesurer l'éclairement direct de la fenêtre. Le dispositif peut ainsi fournir les réglages d'éclairage requis tout au long des différentes utilisations qui sont faites du local.

Lors de l'installation, le dispositif de commande automatique doit être adapté aux particularités du local.

Préférentiellement, les moyens de réglage comprennent une unité à logique floue. Ils peuvent aussi comprendre un réseau de neurones ou une unité à logique floue combinée à un réseau de neurones. Les moyens de réglage reçoivent en entrée successivement des suites de pluralités de mesures. Chaque pluralité de mesures constitue ainsi un vecteur d'entrée correspondant à chaque état d'éclairage. Le traitement collectif peut porter sur une seule pluralité de mesures d'éclairement effectuées à un instant donné. Il peut aussi porter, à la fois, sur la pluralité ci-dessus et sur des pluralités déterminées antérieurement. Tous ces vecteurs d'entrée subissent un traitement collectif commun par l'unité à logique floue. Celle-ci a préalablement été chargée par des règles d'inférence déterminées à part et adaptées à l'utilisation. Elles peuvent être issues de règles d'expert ou extraites par un réseau de neurones à partir d'une base de données. Ces règles peuvent être choisies pour assurer le confort de l'utilisateur et/ou des économies d'énergie. Dans le cas d'un réseau de neurones, celui-ci est soumis à un apprentissage selon les techniques connues pour calculer les coefficients synaptiques du réseau de neurones.

Préférentiellement, selon un mode particulier de réalisation, pour personnaliser le dispositif, celui-ci est apte à reconnaître plusieurs classes de réglages. Pour cela les moyens de réglage sont tels qu'ils stockent des réglages préétablis groupés en classes d'utilisation, les moyens de réglage étant aptes à recevoir ensuite au moins une requête pour activer les réglages préétablis d'une classe d'utilisation. Ces classes peuvent être sélectionnées par un signal de type de comportement qui identifie plusieurs comportements ou préférences personnelles de l'utilisateur. Ces classes peuvent également être sélectionnées par un signal d'activité caractérisant l'utilisation du local. Celle-ci peut être par exemple :

- une activité de lecture/écriture à un bureau
- une activité sur un écran de visualisation
- une réunion à plusieurs personnes.

Le signal de type de comportement et le signal d'activité peuvent être combinés par les moyens de réglage d'après des règles d'inférence à logique floue pour obtenir des réglages différents des réglages préétablis qui seraient activés isolément par chaque requête.

Le signal de type de comportement peut être sélectionné par l'utilisateur lui-même ou être déterminé automatiquement par le dispositif qui comprend pour cela des moyens de reconnaissance. Au cours d'une période initiale de reconnaissance, l'utilisateur impose les réglages qui lui conviennent et, en fin de cette période de reconnaissance, les moyens de reconnaissance classent les réglages effectués par l'utilisateur d'après les différentes classes de comportement qui ont été stockées dans le dispositif. C'est l'utilisateur lui-même qui déclenche la mise en oeuvre de cette période de reconnaissance. Elle peut par exemple se dérouler sur une journée lorsqu'un nouvel utilisateur demande à être reconnu.

En fin de cette période de reconnaissance, les réglages de la classe sélectionnée forment des réglages d'initialisation pour cet utilisateur, à partir desquels le dispositif détermine les réglages subséquents selon le traitement collectif décrit précédemment.

Par ailleurs, lors de l'installation, le dispositif doit être adapté aux caractéristiques propres du local. Ceci est opéré au cours d'une phase d'installation au cours de laquelle on définit une fonction de transfert f qui relie l'éclairement interne artificiel $I_A$ aux valeurs de réglages R des sources de lumière tel que $I_A = f(R)$ ainsi qu'une fonction de transfert g qui relie l'éclairement interne naturel $I_N$ à l'éclairement externe E en l'absence d'éclairage artificiel tel que $I_N = g(E)$.

Selon un mode encore plus performant, le dispositif prend en compte des pluralités de mesures d'éclairement externe. Pour cela il comprend en outre une unité additionnelle de mesure d'éclairement qui délivre une pluralité additionnelle de mesures d'éclairement externe au local, mesures opérées sélectivement dans différentes orientations additionnelles, les moyens de réglage traitant en les combinant ladite pluralité de mesures et ladite pluralité additionnelle de mesures. Comme précédemment ces pluralités peuvent être combinées avec des pluralités antérieures.

Les mesures d'éclairement externe opérées dans différentes orientations tiennent ainsi compte de l'évolution des paramètres tels que des passages nuageux, des passages de pluie, des conditions d'ombre et de lumière spécifiques, de l'heure de la journée et d'autres. Ces paramètres sont avantageusement pris en compte par les moyens de réglage de l'éclairement interne.

L'existence de mesures d'éclairement externe sous plusieurs orientations permet en outre de déterminer l'évolution des paramètres d'éclairement externe au cours du temps. Il est ainsi possible de déterminer, à un instant donné, une prédiction des conditions d'éclairement externe à un instant ultérieur. Cette prédiction est prise en compte pour déterminer les réglages à effectuer sur les sources d'éclairage du local.

D'autres données atmosphériques peuvent également être prises en considération telles que la température externe, le taux d'humidité externe, la pression atmosphérique, la vitesse du vent, et autres. Ces données peuvent être directement issues de capteurs placés à l'extérieur ou provenir de stations météorologiques.

Pour effectuer les mesures d'éclairement sous différentes orientations, l'unité de mesure comprend une famille de capteurs photosensibles et des moyens pour limiter à un faisceau de faible ouverture le flux lumineux arrivant sur chaque capteur. Préférentiellement la famille de capteurs est formée d'une barrette de capteurs. Elle peut également être bidimensionnelle pour exploiter un plus grand nombre de mesures et tenir compte d'un plus grand nombre d'orientations.

Les moyens pour limiter l'ouverture de chaque faisceau peuvent être constitués par exemple d'un optique à multilentilles. Préférentiellement, pour des raisons de coût, les moyens pour limiter sont formés d'une boîte opaque à la lumière, à l'exception d'une très faible ouverture qui limite l'entrée d'un faisceau de faible diamètre. Les capteurs placés à l'intérieur de la boîte reçoivent ainsi ce faisceau sous des orientations différentes qui dépendent de la position de chaque capteur dans la boîte.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma d'un dispositif de commande selon l'invention relié à des sources de lumière,

Figure 2 : un schéma indiquant une disposition de l'unité de mesure dans un local, ladite unité étant connectée à un dispositif à logique floue,

Figure 3 : un schéma à logique floue d'une boîte munie de capteurs, la boîte ayant une petite ouverture pour laisser passer des faisceaux de faible ouverture,

Figure 4 : un schéma d'une double boîte pour effectuer des mesures d'éclairement interne et des mesures d'éclairement externe,

Figure 5 : un schéma d'un dispositif de commande muni d'une unité de prédiction,

Figure 6 : un schéma d'un dispositif de commande muni d'une unité de reconnaissance du type de comportement d'un utilisateur,

Figure 7 : un schéma d'un dispositif de commande muni de moyens pour prendre en compte d'autres données,

Figure 8 : un schéma d'un exemple de moyens de réglage,

Figure 9 : un schéma se rapportant à la phase d'installation du dispositif.

Pour des raisons de simplification, on désignera par la suite une direction donnée et l'éclairem1ent mesuré dans cette direction par le même symbole. Ainsi, dans une direction interne $I_1$ on mesurera l'éclairement interne $I_1$. De même, dans une direction externe $E_1$ on mesurera l'éclairement externe $E_1$.

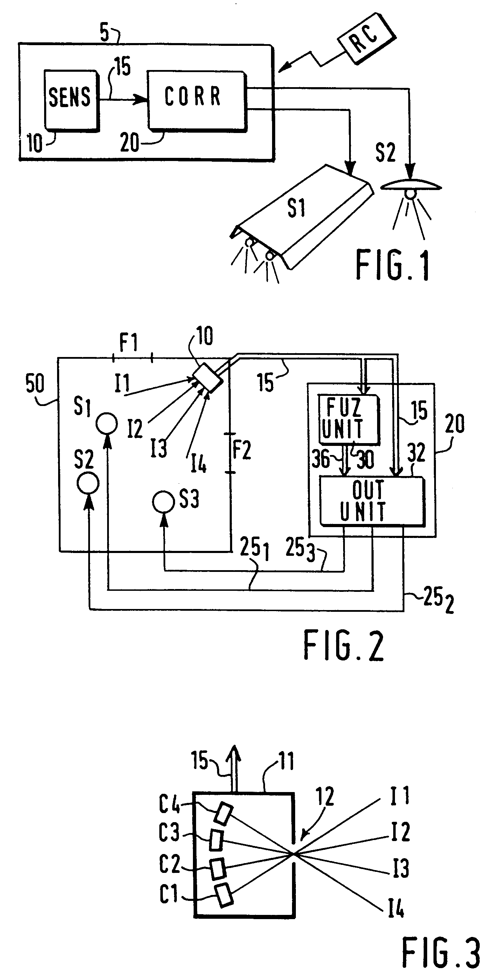

La figure 1 représente un dispositif de commande 5 comprenant une unité SENS 10 de mesure d'éclairement et des moyens de réglage CORR 20 des éclairements délivrés par des sources d'éclairage S1, S2 réparties dans le local. Selon le type de sources d'éclairage, celles-ci sont munies de circuits d'activation (non représentés) tels que des ballasts ou autres. Une télécommande RC peut permettre à l'utilisateur d'effectuer lui-même des réglages d'éclairage. Il peut aussi s'agir d'interrupteurs et/ou de rhéostats conventionnels.

L'unité 10 de mesure effectue une pluralité de mesures d'éclairement interne, chacune étant effectuée dans une direction différente I1, I2, I3, I4 du local (figure 2).

Pour cela l'unité de mesure 10 est placée dans un endroit du local 50 de telle façon qu'elle puisse recevoir des éclairements en provenance de l'ensemble du local en évitant préférentiellement les éclairements issus directement de fenêtres F1, F2. Le local est muni de sources d'éclairage S1, S2, S3 destinées à éclairer artificiellement le local, par exemple des postes de travail ou d'autres postes (non représentés). Il n'y a pas de relation directe entre le nombre de sources d'éclairage S1, S2, S3 et le nombre de directions I1-I4 dans lesquelles sont collectées les mesures d'éclairement. Les directions I1-I4 peuvent correspondre ou non avec les directions dans lesquelles sont vues les sources d'éclairage à partir de l'unité de mesure 10. Celle-ci délivre une pluralité de mesures (connexions 15) aux moyens de réglage 20 qui peuvent comprendre une unité à logique floue ou un réseau de neurones ou une combinaison des deux.

Une pluralité de mesures se compose de plusieurs mesures d'éclairement déterminées à un instant donné, formant un vecteur d'entrée pour, par exemple, l'unité à logique floue. Ces mesures répétées dans le temps forment ainsi une suite de pluralités de mesures. Les moyens de réglage peuvent effectuer les réglages soit d'après une pluralité de mesures déterminées à un instant donné, soit les effectuer d'après ladite pluralité combinée avec des pluralités antérieures de mesures d'éclairement.

Ces mesures sont traitées par l'unité à logique floue et/ou par le réseau de neurones. Pour cela ces derniers renferment soit des règles d'inférence pour l'unité à logique floue soit des coefficients synaptiques pour le réseau de neurones. Une procédure connue d'apprentissage off-line permet de déterminer ces paramètres pour satisfaire aux conditions d'éclairage requis.

En phase d'exploitation, lorsque l'unité à logique floue ou le réseau de neurones reçoivent en entrée une pluralité courante de mesures d'éclairement, ladite unité ou ledit réseau fournissent en sortie des commandes de réglage qui activent individuellement les sources d'éclairage. Les mesures d'éclairement 15 sont ainsi traitées collectivement par les moyens de réglage 20. Ceux-ci délivrent en retour des commandes de réglage individuelles $25_1$, $25_2$, $25_3$ pour chaque source d'éclairage.

Les moyens de réglage 20 (figure 2) comprennent une unité à logique floue 30 FUZ UNIT et une unité de sortie 32 OUT UNIT qui reçoivent toutes deux les mesures d'éclairement 15. L'unité à logique floue 30 traite collectivement lesdites mesures et délivre des mesures d'éclairement désiré par l'utilisateur (connexion 36). L'unité de sortie 32 tient compte des écarts entre les éclairements mesurés 15 et les éclairements désirés 36 pour modifier les réglages des sources de lumière à l'aide des commandes de réglage $25_1$, $25_2$, $25_3$. Préférentiellement les vecteurs correspondant aux éclairements désirés ont une structure analogue aux vecteurs correspondant aux éclairements mesurés.

L'unité 10 de mesure d'éclairement est apte à délivrer des mesures d'éclairement effectuées dans plusieurs directions. Préférentiellement, l'unité 10 présente la structure de la figure 3. Elle comprend une boîte 11 fermée munie d'une petite ouverture 12. Cette boîte 11 renferme des capteurs photosensibles C1, C2, C3, C4. L'éclairement extérieur à la boîte pénètre dans la boîte fermée 11 par la petite ouverture, de sorte que chaque capteur reçoit respectivement un éclairement limité à un faisceau de faible ouverture issu respectivement des directions I1, I2, I3, I4. La disposition des capteurs dans la boîte dépend de la position des endroits du local dont on veut mesurer l'éclairement.

Les capteurs C1-C4 peuvent être des capteurs isolés ou des capteurs intégrés, par exemple un dispositif à transfert de charges photosensible. Il est possible de remplacer l'ouverture 12 par une fenêtre à multilentilles ou autres qui sélectionne des faisceaux I1-I4 de faible ouverture.

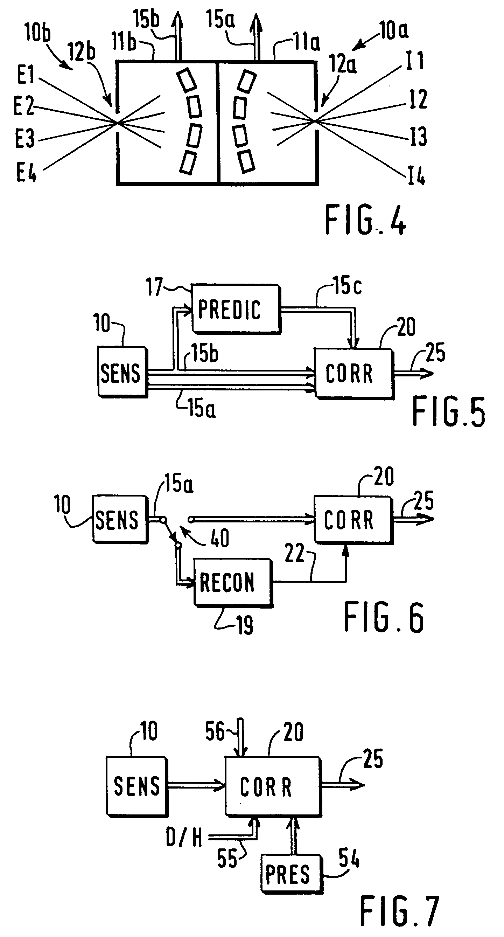

Selon un mode complémentaire, il est possible de régler les sources d'éclairage en prenant en compte, en outre, des mesures d'éclairement externe au local. Pour cela une unité additionnelle de mesure, analogue à celle de la figure 3, peut être utilisée, à condition de diriger son ouverture 12 vers l'extérieur du local. Pour des raisons de simplification de montage, il est apparu intéressant de disposer tête-bêche l'unité de mesure et l'unité additionnelle de mesure, selon le schéma de la figure 4. Il est néanmoins possible de les dissocier. Il en résulte une unité double de mesure formée :

- d'une boîte 11a munie d'une ouverture 12a dirigée vers l'intérieur du local pour effectuer des mesures d'éclairement interne I1 à I4,
- et d'une boîte 11b munie d'une ouverture 12b dirigée vers l'extérieur du local pour effectuer des mesures d'éclairement externe E1 à E4.

On place avantageusement cette unité double de mesure près d'une fenêtre du local en l'orientant correctement pour mesurer les éclairements requis.

Les mesures d'éclairement interne et les mesures d'éclairement externe constituent des vecteurs d'entrée qui sont traités collectivement par les moyens de réglage 20.

Chaque capteur des figures 3 et 4 peut être dédoublé selon deux sous-capteurs qui sont munis chacun d'un filtre de lumière limitant le spectre de la lumière reçue par chaque sous-capteur. En tenant compte des mesures de flux lumineux détectés par chaque sous-capteur muni de son filtre, les moyens de réglage peuvent ainsi agir sur les températures de couleur de chaque source d'éclairage.

Les éclairements externes sont issus de la lumière du jour. Ils varient donc avec l'heure de la journée et également avec les conditions climatiques. On conçoit ainsi qu'avec les déplacements du soleil et/ou des nuages, une valeur donnée d'éclairement qui était par exemple mesurée dans la direction E3 à un instant donné soit mesurée par exemple dans la direction E2 quelque temps après. Une unité à logique floue ou un réseau de neurones peuvent être soumis à un apprentissage pour apprendre à reconnaître de telles évolutions. Il est donc possible selon l'invention de prédire l'éclairement que va recevoir un capteur d'après les éclairements reçus par les capteurs qui examinent des directions avoisinantes. Pour cela le dispositif peut comprendre des moyens de prédiction 17 PREDIC qui effectuent de telles prédictions (figure 5) en déterminant des conditions d'éclairement futur à partir de mesures d'éclairement externe effectuées à un instant donné. Pour cela les moyens de prédiction mettent en oeuvre un programme préétabli qui, à partir de mesures d'éclairement externe effectuées à un instant donné, prédit des mesures d'éclairement externe pour un instant situé par exemple quelques minutes plus tard.

La pluralité 15b de mesures d'éclairement externe est ainsi introduite dans les moyens de prédiction 17 qui délivrent des prédictions 15c de mesures d'éclairement externe (figure 5). Les moyens de réglage 20 reçoivent en entrée à la fois les mesures 15b d'éclairement externe faites à un instant donné, les prédictions 15c issues des moyens de prédiction et les mesures 15a d'éclairement interne. De la même manière que cela a été décrit précédemment, les moyens de réglage 20 subissent initialement un apprentissage pour apprendre toutes ces mesures en les combinant. Les moyens de prédiction 17 peuvent être groupés avec les moyens de réglage 20 dans un même ensemble.

L'invention permet de commander les sources d'éclairage de telle manière que celles-ci assurent les éclairements requis dans la partie respective du local qui les concerne. Ces commandes d'éclairement peuvent être prévues pour permettre, par exemple au cours d'une même journée, d'effectuer des activités variées dans le même local. Un même utilisateur peut vouloir obtenir certains réglages pour certaines activités à un moment donné et obtenir d'autres réglages pour d'autres activités à un autre moment. Il est possible de tenir compte de conditions d'éclairage différentes réclamées par chaque utilisateur. Enfin, certains postes de travail peuvent être utilisés à certains moments et pas à d'autres.

Pour cela on distingue deux possibilités particulières d'intervention sur les réglages des sources de lumière.

Une première possibilité consiste à identifier les préférences personnelles d'un utilisateur et à affecter son comportement à une classe de réglage. Pour cela on a préalablement stocké dans les moyens de réglage différentes classes de réglage K1, K2, K3. Lorsque l'utilisateur doit se déclarer au dispositif, il effectue une remise à zéro du fonctionnement du dispositif. A partir de ce moment, le dispositif se met en mode de scrutation pour scruter le comportement de l'utilisateur sur une période limitée, par exemple une journée. L'utilisateur a alors la possibilité par des organes conventionnels (interrupteurs, rhéostats ou télécommande) de changer les réglages des sources de lumière. Ces réglages sont analysés par le dispositif de commande qui détecte ainsi à quelle classe de réglage K1, K2, K3 appartient le comportement de l'utilisateur. A l'issue de cette période limitée, l'installation est alors dédiée à ce type de comportement et le dispositif passe en mode d'exploitation au cours duquel il effectue le réglage automatique de l'éclairage selon le traitement collectif décrit précédemment.

Pour cela le dispositif comprend des moyens de reconnaissance 19 RECON (figure 6) qui reçoivent les mesures d'éclairement interne 15a. Un commutateur 40 dirige au cours de la période de reconnaissance lesdites mesures 15a vers les moyens de reconnaissance 19. Ceux-ci délivrent en retour un signal de type de comportement 22 qui indique aux moyens de réglage 20 à quelle classe de réglage correspond le comportement identifié. En phase d'exploitation le commutateur 40 bascule pour diriger les mesures d'éclairement 15a en entrée des moyens de réglage 20.

Une seconde possibilité d'intervention consiste pour l'utilisateur à indiquer aux moyens de réglage 20 le type d'activité qu'il veut exécuter. Pour cela, les moyens de réglage 20 sont munis d'une entrée qui peut recevoir un signal d'activité actionné par l'utilisateur pour indiquer son choix.

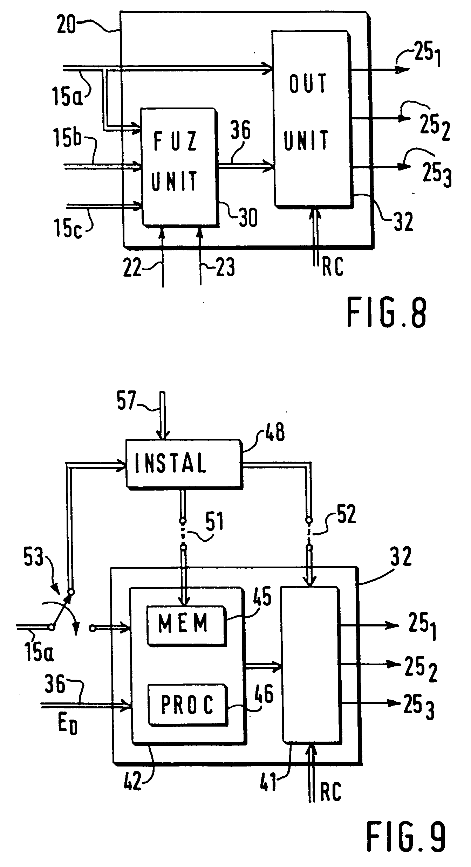

La figure 8 représente un schéma des moyens de commande 20 aptes à combiner :

- les mesures 15a d'éclairement interne
- les mesures 15b d'éclairement externe
- les mesures 15c de prédiction d'éclairement externe.

Cette combinaison délivre des mesures 36 d'éclairement désiré. Celles-ci sont contrôlées par :

- le signal 22 de type de comportement de l'utilisateur,
- le signal 23 de type d'activité voulue par l'utilisateur.

Le signal 23 peut servir à sélectionner une sous-classe de la classe activée par le signal 22. Il est également possible que chaque signal sélectionne respectivement deux classes différentes K1 et K2, l'unité à logique floue 30 délivrant un résultat pondéré k.K1 + (1-k) K2 issu de chaque classe sélectionnée où k est un coefficient inférieur à 1.

Les moyens de réglage 20 peuvent en outre disposer (figure 7) d'une entrée 56 pour tenir compte d'autres données telles que des données météorologiques (humidité, température, vitesse du vent, ...) issues par exemple d'une station météorologique. Ces autres données sont traitées en combinaison avec les données précédentes.

L'unité à logique floue ou le réseau de neurones peuvent également être reliés à un détecteur de présence PRES 54 pour ne commander les sources d'éclairage que lorsqu'un utilisateur a été détecté.

Pour identifier le moment de la journée, les moyens de réglage peuvent recevoir des données temporelles D/H 55 indiquant l'heure et/ou le jour et/ou le mois qui sont combinées aux données de mesures d'éclairement utilisées pour réaliser les réglages.

Le dispositif selon l'invention peut commander l'éclairage de n'importe quel local. Néanmoins, en fonction de la position de l'unité de mesure 10 dans le local et des particularités d'éclairement du local, il est nécessaire de régler les seuils de fonctionnement des différentes commandes de réglage. L'unité de sortie 32 doit pour cela être adaptée au local.

Les éclairements internes atificiels $I_A$ d'un local dépendent des commandes de réglage R selon une fonction f telle que $I_A = f(R)$. De même, les éclairements internes naturels $I_N$ dépendent des éclairements externes E selon une fonction g telle que $I_N = g(E)$.

Chaque installation est caractérisée par des fonctions f et g spécifiques. Selon l'invention on détermine ces fonctions en effectuant quelques mesures de test au moment de l'installation. Pour cela, on donne à une commande de réglage R1 un certain nombre de valeurs de réglage et on mesure les éclairements internes artificiels $I_A$ correspondants. On fait de même pour d'autres commandes de réglages R2, R3. On mesure de même des éclairements internes naturels $I_N$ en fonction des éclairements externes E à des moments différents en l'absence d'éclairements artificiels.

L'installateur dispose pour cela d'un boîtier d'installation INSTAL 48 qui permet de calibrer l'unité de sortie 32. Celle-ci (figure 9) comprend un étage 41 qui répartit les commandes de réglages et un étage 42 de traitement qui décide des actions à effectuer d'après les écarts qui apparaissent entre les éclairements 15a mesurés et les éclairements désirés 36 pour tendre à réduire ces écarts. Cet étage 42 comprend lui-même une unité de mémoire MEM 45 et une unité de traitement PROC 46.

Au moment de la première installation dans un local, l'installateur relie le boîtier INSTAL 48 par des connexions temporaires 51, 52 à l'unité de mémoire MEM 45 et à l'étage 41. L'étage de traitement 42 est rendu inactif sur l'étage 41 pendant cette période d'installation.

Les mesures 15a d'éclairement interne sont commutées par un commutateur 53 vers l'entrée du boîtier INSTAL. Celui-ci dispose d'une entrée 57, qui peut être une télécommande, pour permettre à l'installateur d'imposer différentes valeurs de réglage aux commandes de réglages $25_1$, $25_2$, $25_3$. Une détermination des fonctions $I_A = f(R)$ et $I_N = g(E)$ est ainsi effectuée dans le boîtier INSTAL en effectuant un nombre limité de mesures. Cette détermination se présente sous forme de paramètres fixes, par exemple des coefficients de pondération, qui sont chargés dans l'unité de mémoire MEM 45. Lorsque l'installation est effectuée, le boîtier INSTAL est enlevé et le dispositif de réglage peut effectuer les commandes automatiques d'éclairement comme cela vient d'être décrit.

**Revendications**

1. Dispositif (5) de commande automatique d'éclairage comprenant des moyens (10) de mesure d'éclairement d'un local (50), et des moyens (20) de réglage de sources d'éclairage (S1, S2) réparties dans le local en fonction des mesures d'éclairement, caractérisé en ce que les moyens de mesure d'éclairement comprennent une unité de mesure (10) qui délivre une pluralité (15) de mesures d'éclairement interne opérées sélectivement dans différentes orientations (I1-I4), les moyens de réglage (20) traitant, en les combinant, la pluralité (15) de mesures pour délivrer une commande de réglage individuelle ($25_1$, $25_2$, $25_3$) à respectivement chaque source d'éclairage.

2. Dispositif selon la revendication 1 caractérisé en ce que les moyens de réglage sont tels qu'ils effectuent les réglages desdites sources en combinant ladite pluralité (15) avec des pluralités antérieures de mesures d'éclairement.

3. Dispositif selon la revendication 2 caractérisé en ce que les moyens de réglage sont tels qu'ils stockent des réglages préétablis groupés en classes d'utilisation, les moyens de réglage étant aptes à recevoir au moins une requête pour activer les réglages préétablis d'une classe d'utilisation.

4. Dispositif selon la revendication 3 caractérisé en ce qu'une première requête est un signal (22) de type de comportement caractérisant l'utilisateur, la première requête délivrant des premiers réglages préétablis.

5. Dispositif selon la revendication 4 caractérisé en ce qu'il comprend des moyens de reconnaissance (19) qui déterminent le signal (22) de type de comportement en scrutant la pluralité (15a) de mesures d'éclairement interne à l'issue de réglages imposés par l'utilisateur au cours d'une période de reconnaissance.

6. Dispositif selon les revendications 3 ou 4 caractérisé en ce qu'une seconde requête est un signal d'activité caractérisant l'utilisation du local, la seconde requête délivrant des seconds réglages préétablis.

7. Dispositif selon les revendications 4 ou 5 et 6 caractérisé en ce que les moyens de réglage (20) combinent la première requête et la seconde requête d'après des règles d'inférence à logique floue pour obtenir des réglages différents desdits premiers réglages et desdits seconds réglages.

8. Dispositif selon une des revendications 1 à 7 caractérisé en ce qu'il comprend une unité additionnelle (10b) de mesure d'éclairement qui délivre une pluralité additionnelle (15b) de mesures d'éclairement externe au local, mesures opérées sélectivement dans différentes orientations additionnelles (E1-E4), les moyens de réglage (20) fonctionnant en combinant ladite pluralité de mesures et ladite pluralité additionnelle de mesures.

9. Dispositif selon la revendication 8 caractérisé en ce que les moyens de réglage (20) comprennent des moyens de prédiction (17) qui traitent la pluralité additionnelle (15b) de mesures d'éclairement externe délivrées à un instant donné pour calculer une prédiction (15c) de ladite pluralité additionnelle pour un temps ultérieur, les moyens de réglage (20) fonctionnant avec en outre ladite prédiction pour régler les sources d'éclairage.

10. Dispositif selon une des revendications 1 à 9 caractérisé en ce que les moyens de réglage sont munis d'entrées (52, 55) pour recevoir des données atmosphériques et/ou des données temporelles qui sont agrégées audit traitement combiné.

11. Dispositif selon une des revendications 1 à 10 caractérisé en ce que l'unité de mesure (10) comprend une famille de capteurs photosensibles (C1-C4) et des moyens (11, 12) pour limiter à un faisceau de faible ouverture le flux lumineux arrivant sur chaque capteur.

12. Dispositif selon la revendication 11 caractérisé en ce que les moyens pour limiter comprennent une boîte fermée (11) destinée à recevoir la famille de capteurs, la boîte étant munie d'une ouverture (12) de faible diamètre telle que les capteurs reçoivent, à travers ladite ouverture, respectivement des faisceaux lumineux partiels d'orientation différente.

13. Dispositif selon les revendications 11 ou 12 caractérisé en ce que chaque capteur comprend une paire de sous-capteurs munis de filtres de lumière différents.

14. Système d'éclairage pour commander les conditions d'éclairage dans un local (50) comprenant des sources d'éclairage (S1, S2) réparties dans le local, caractérisé en ce qu'il comprend un dispositif (5) de commande automatique d'éclairage selon une des revendications 1 à 13.

**Claims**

1. A device (5) for automatic control of lighting comprising means (10) for measuring the illumination of premises (50) and means (20) for setting lighting sources (S1, S2), distributed within the premises, on the basis of the illumination measurements, characterized in that the means for measuring illumination comprise a measuring unit (10) which delivers a plurality (15) of measurements of internal illumination which are carried out selectively in various orientations (I1-I4), the setting means (20) processing, by combining them, the plurality (15) of measurements so as to deliver an individual setting command ($25_1$, $25_2$, $25_3$) to each respective light source.

2. A device as claimed in Claim 1, characterized in that the setting means are such that they effect the settings of the said sources by combining the said plurality (15) with earlier pluralities of illumination measurements.

3. A device as claimed in Claim 2, characterized in that the setting means are such that they store specified which are settings grouped in usage classes, the setting means being able to receive at least one request to activate the specified settings of a usage class.

4. A device as claimed in Claim 3, characterized in that a first request is a signal (22) of pattern of behaviour which characterizes the user, the first request delivering first specified settings.

5. A device as claimed in to Claim 4, characterized in that it comprises recognition means (19) which determine the signal (22) of pattern of behaviour by scanning the plurality (15a) of measurements of internal illumination upon completion of settings prescribed by the user during a recognition period.

6. A device as claimed in Claim 3 or 4, characterized in that a second request is an activity signal characterizing the usage of the premises, the second request delivering second specified settings.

7. A device as claimed in Claims 4 or 5 and 6, characterized in that the setting means (20) combine the first request and the second request in accordance with fuzzy logic inference rules so as to obtain settings different from said first settings and from said second settings.

8. A device as claimed in one of the Claims 1 to 7, characterized in that it comprises an additional unit (10b) for measuring illumination which delivers an additional plurality (15b) of measurements of illumination external to the premises, which measurements are carried out selectively in various additional orientations (E1-E4), the setting means (20) operating by combining said plurality of measurements and said additional plurality of measurements.

9. A device as claimed in Claim 8, characterized in that the setting means (20) comprise prediction means (17) which process the additional plurality (15b) of measurements of external illumination delivered at a given instant so as to calculate a prediction (15c) of said additional plurality for a later time, the setting means (20) also operating with said prediction so as to set the light sources.

10. A device as claimed in one of the Claims 1 to 9, characterized in that the setting means are provided with inputs (52,55) for receiving atmospheric data and/or temporal data which is aggregated with said combined processing.

11. A device as claimed in one of the Claims 1 to 10, characterized in that the measuring unit (10) comprises a group of photosensitive sensors (C1-C4) and means (11,12) for limiting the light flux arriving at each sensor to a beam of small aperture.

12. A device as claimed in Claim 11, characterized in that the means for limiting comprise a closed box (11) which is intended to accommodate the group of sensors and is provided with an aperture (12) of small diameter such that the sensors receive, through the said aperture, respective partial light beams of different orientation.

13. A device as claimed in Claim 11 or 12, characterized in that each sensor comprises a pair of subsensors provided with different light filters.

14. A lighting system for controlling the lighting conditions in premises (50) with lighting sources (S1,S2) distributed within the premises, characterized in that it comprises a device (5) for automatic control of lighting as claimed in one of the Claims 1 to 13.

**Patentansprüche**

1. Einrichtung (5) zur automatischen Steuerung einer Beleuchtung mit Mitteln (10) zum Messen der Beleuchtung eines Raumes (50) und Mitteln (20) zum Einstellen der in dem Raum verteilten Beleuchtungsquellen (S1, S2) unter Berücksichtigung der Beleuchtungsmessungen, dadurch gekennzeichnet, daß die Mittel zum Messen der Beleuchtung eine Meßeinheit (10) enthalten, die eine Vielzahl (15) von internen Beleuchtungsmessungen abgibt, die selektiv verschieden ausgerichtet (I1-I4) vorgenommen wird, wobei die Einstellungsmittel (20) die Vielzahl (15) an Messungen kombiniert verarbeiten, um für jeweils jede Beleuchtungsquelle eine gesondert gesteuerte Einstellung ($25_1$, $25_2$, $25_3$) vorzunehmen.

2. Einrichtung nach Anspruch 1, dadurch gekennzeichnet, daß die Einstellungsmittel derart sind, daß sie die Einstellungen der besagten Quellen in Kombination der besagten Vielzahl (15) mit den vorhergehenden Vielzahlen an Beleuchtungsmessungen vornehmen.

3. Einrichtung nach Anspruch 2, dadurch gekennzeichnet, daß die Einstellungsmittel derart sind, daß sie die vorbestimmten, in Anwendungsklassen zusammengestellten Einstellungen speichern, und die Einstellungsmittel dazu in der Lage sind, mindestens Anfrage zu erhalten, um die vorbestimmten Einstellungen einer Anwendungsklasse zu aktivieren.

4. Einrichtung nach Anspruch 3, dadurch gekennzeichnet, daß eine erste Anfrage ein Signal (22) von dem das Verhalten des Anwenders charakterisierenden Typs ist, und die erste Anfrage zu den ersten vorbestimmten Einstellungen führt.

5. Einrichtung nach Anspruch 4, dadurch gekennzeichnet, daß sie Erkennungsmittel (19) enthält, die das Signal (22) des Verhaltenstyps bestimmen, indem sie die Vielzahl (15a) an internen Beleuchtungsmessungen am Ende der vom Anwender im Laufe des Erkennungszeitraums vorgegebenen Einstellungen ergründen.

6. Einrichtung nach Anspruch 3 oder 4, dadurch gekennzeichnet, daß die zweite Anfrage ein die Verwendung des Raumes charakterisierendes Aktivitätensignal ist, und die zweite Anfrage zu den zweiten vorbestimmten Einstellungen führt.

7. Einrichtung nach Anspruch 4 oder 5 und 6, dadurch gekennzeichnet, daß die Einstellungsmittel (20) die erste Anfrage und die zweite Anfrage nach den Folgerungsregeln der Fuzzi-Logik kombinieren, um von den besagten ersten Einstellungen und den besagten zweiten Einstellungen unterschiedliche Einstellungen zu erhalten.

8. Einrichtung nach einem der Ansprüche 1 bis 7, dadurch gekennzeichnet, daß sie eine zusätzliche Beleuchtungsmeßeinheit (10b) enthält, die eine zusätzliche Vielzahl (15b) an Messungen der externen Beleuchtung des Raumes abgibt, Messungen, die zusätzlich selektiv ausgerichtet (E1-E4) vorgenommen werden, wobei die Einstellungsmittel (20) die besagte Vielzahl an Messungen und die besagte zusätzliche Vielzahl Messungen kombiniert verarbeiten.

9. Einrichtung nach Anspruch 8, dadurch gekennzeichnet, daß die Einstellungsmittel (20) Vorausbestimmungsmittel (17) enthalten, die die zusätzliche Vielzahl (15b) externer Beleuchtungsmessungen verarbeiten, die zu einem bestimmten Zeitpunkt erhalten wurden, um eine Vorausbestimmung (15c) der besagten zusätzlichen Vielzahl für einen späteren Zeitraum zu berechnen, während die Einstellungsmittel (20) zudem mit der besagten Vorausbestimmung arbeiten, um die Beleuchtungsquellen einzustellen.

10. Einrichtung nach einem der Ansprüche 1 bis 9, dadurch gekennzeichnet, daß die Einstellungsmittel mit Eingängen (52, 55) versehen sind, um atmosphärische und/oder zeitliche Daten zu erhalten, die in die besagte kombinierte Verarbeitung integriert werden.

11. Einrichtung nach einem der Ansprüche 1 bis 10, dadurch gekennzeichnet, daß die Meßeinheit (10) eine Gruppe lichtempfindlicher Sensoren (C1-C4) und Mittel (11, 12) enthält, um bei einem Strahl geringer Öffnung den auf jeden Sensor auftreffenden Lichtfluß zu begrenzen.

12. Einrichtung nach Anspruch 11, dadurch gekennzeichnet, daß die Mittel zur Begrenzung ein geschlossenes Gehäuse (11) enthalten, dafür bestimmt, die Sensorengruppe aufzunehmen, wobei das Gehäuse mit einer Öffnung (12) geringen Durchmessers versehen ist, damit die Sensoren über die besagte Öffnung jeweils teilweise Lichtstrahlen verschiedener Ausrichtungen erhalten.

13. Einrichtung nach den Ansprüchen 11 oder 12, dadurch gekennzeichnet, daß jeder Sensor ein Paar Unter-Sensoren enthält, mit verschiedenen Lichtfiltern versehen.

14. Beleuchtungssystem zur Steuerung der Beleuchtungsbedingungen in einem Raum (50), mit in dem Raum verteilten Beleuchtungsquellen (S1, S2), dadurch gekennzeichnet, daß es eine Einrichtung (5) zur automatischen Steuerung der Beleuchtung nach den Ansprüchen 1 bis 13 enthält.

FIG.1

FIG.2

FIG.3

FIG.4

FIG.5

FIG.6

FIG.7

FIG.8

FIG.9